# FASCICULE DE BREVET EUROPEEN

(11) **EP 1 858 716 B1**
(45) Date de publication et mention de la délivrance du brevet: **27.08.2014**
(21) Numéro de dépôt: 06724931.8
(22) Date de dépôt: 03.03.2006
(51) Int. Cl.: B60C 15/00, B60C 15/06

(54) **STRUCTURE DE BOURRELET DE PNEUMATIQUE.**
REIFENWULSTSTRUKTUR
TYRE BEAD STRUCTURE

(30) Priorité: 07.03.2005 FR 0502287
(43) Date de publication de la demande: 28.11.2007
(73) Titulaire: COMPAGNIE GENERALE DES ETABLISSEMENTS MICHELIN, 63000 Clermont-Ferrand (FR); Michelin Recherche et Technique S.A., 1763 Granges-Paccot (CH)
(72) Inventeur: FERLIN, Olivier, Saint Genes-l'enfant, 63200 Malauzat (FR); GRISIN, Bopha, F-63410 Loubeyrat (FR)
(74) Mandataire: Diernaz, Christian
(86) Numéro de dépôt international: PCT/EP2006/060456
(87) Numéro de publication internationale: WO 2006/094947

(56) Documents cités:
- EP-A- 1 174 289
- EP-A- 1 310 385
- US-A- 3 946 785
- US-A1- 2002 195 186
- US-B1- 6 408 914

## Description

L'invention concerne les pneumatiques pour véhicules portant de lourdes charges et plus particulièrement la structure de renforcement de tels pneumatiques.

De manière connue, un pneumatique comprend une bande de roulement surmontant une partie de sommet présentant des rigidités circonférentielle et transversal, ce sommet surmontant en partie une armature de carcasse. Cette armature de carcasse comprend une pluralité de renforts métalliques disposés selon une orientation dite radiale (c'est-à-dire en faisant dans le pneumatique un angle au moins égal à 80° avec la direction circonférentielle). En outre, le pneumatique comprend des bourrelets destinés à venir en contact avec des sièges de jante, ces bourrelets comprenant au moins un renfort dans la direction circonférentielle (comme par exemple une tringle). Un mode de liaison entre l'armature de carcasse et la tringle consiste à enrouler au moins en partie ladite armature autour de la tringle en formant un retournement s'étendant plus ou moins haut dans le flanc. Ce mode de liaison peut conduire, sous les conditions d'usage, à l'apparition de décollement entre le retournement et les matériaux à base de caoutchouc entourant ledit retournement.

Dans le cas d'un pneumatique à forte capacité de charge, il est souvent nécessaire de prévoir que l'armature de carcasse ait pour renforts des câbles formés d'une pluralité de fils métalliques, ces câbles présentant, soit du fait du diamètre de chaque fil soit de la structure de câblage, ou encore de ces deux facteurs, une très forte rigidité à la flexion. Cette rigidité de flexion peut conduire à des difficultés de fabrication du pneumatique notamment quand il s'agit de réaliser l'ancrage de l'armature de carcasse sur la tringle en formant un retournement. Ces difficultés sont essentiellement liées à la trop grande rigidité de flexion des renforts impliquant la mise en oeuvre d'efforts importants pour retourner l'armature de carcasse autour de chaque tringle de bourrelet. Ces difficultés sont encore accrues dès lors que la longueur du retournement de l'armature de carcasse est trop faible et que les forces de collage à cru des matériaux non vulcanisés ne suffisent pas à maintenir ledit retournement en place pendant toutes les phases de la fabrication jusqu'au moulage du pneumatique. Il est connu diverses structures de bourrelet de pneu selon lesquelles les extrémités de l'armature de carcasse sont disposées dans des zones moins sensibles. Citons notamment, US 3946785 qui décrit un pneu pour lequel le retournement de la carcasse est couplé à une structure faisant le tour d'une tringle de bourrelet. US 6408914 montre une structure de bourrelet dans laquelle au moins une nappe de carcasse est enroulée et plaquée sur toutes les faces d'une tringle. US2002/195186 montre une structure de bourrelet dans laquelle la carcasse est en contact avec la tringle, l'extrémité de cette carcasse étant contre la base de cette tringle.

Le but de l'invention concerne un pneumatique dont les bourrelets ont une structure qui, tout en donnant satisfaction sur le plan de l'endurance, est plus aisée à fabriquer.

Un pneumatique selon l'invention comprend des flancs reliant une partie de sommet à des bourrelets destinés à venir en contact avec une jante de montage, ces flancs comprenant une armature de carcasse formée d'une pluralité de renforts disposés selon un angle d'au moins 70° avec la direction circonférentielle, cette armature de carcasse étant ancrée dans chaque bourrelet à au moins une tringle de bourrelet et ayant, dans chaque bourrelet, une extrémité A, la tringle de bourrelet présentant essentiellement une rigidité d'extension circonférentielle et, vue en coupe méridienne, un profil externe comprenant deux parties de profil, une première partie radialement à l'intérieur de largeur axiale L s'étendant entre un point B2 axialement le plus à l'intérieur et un point B1 axialement le plus à l'extérieur, une seconde partie radialement à l'extérieur entre lesdits points B1 et B2, cette tringle étant recouverte par au moins un profilé de mélange de caoutchouc pour assurer une liaison mécanique avec l'armature de carcasse. Par ailleurs, cette armature de carcasse est enroulée en partie seulement autour de la tringle en allant axialement de l'intérieur du pneumatique vers l'extérieur, de manière à avoir une extrémité de ladite armature située axialement entre les points B1 et B2 et radialement à l'intérieur de la première partie de profil radialement interne de la tringle. Chaque bourrelet comprend au moins une armature additionnelle de couplage en contact sur une longueur Dc avec l'armature de carcasse, ladite longueur Dc étant mesurée en partant de l'extrémité A de l'armature de carcasse située radialement à l'intérieur de la première partie de profil de la tringle.

Vu en coupe méridienne, chaque bourrelet de ce pneumatique est tel que l'armature additionnelle de couplage prolonge l'armature de carcasse de manière à être enroulée au moins en partie autour de la tringle, c'est-à-dire de manière à recouvrir au moins partiellement la seconde partie de profil de la tringle radialement à l'extérieur entre lesdits points B1 et B2, ladite armature additionnelle de couplage ayant un tracé tel que la tangente à ce tracé, en un point K de ladite armature, fait un angle inférieur à 45 degrés avec une droite parallèle à l'axe de rotation. Ce point K est déterminé comme le point d'intersection entre le tracé de l'armature additionnelle et une droite passant par le point du profil de la tringle radialement le plus à l'extérieur, cette droite étant perpendiculaire à l'axe de rotation.

D'une manière pratique, le point K est pris sur le profilé de mélange de caoutchouc sur lequel est plaqué l'armature additionnelle. Lorsque la tringle comprend sur sa deuxième partie de profil une pluralité de points tous à la même distance de l'axe de rotation, on choisit le point axialement le plus à l'extérieur.

Par vu en coupe méridienne, on entend que le bourrelet ou le pneumatique est vu dans un plan de coupe contenant l'axe de rotation dudit pneumatique.

Préférentiellement, la longueur de couplage Dc entre l'armature additionnelle et l'armature de carcasse est au moins égale à la distance axiale L séparant les points B 1 et B2 de la tringle.

Préférentiellement, la distance axiale L séparant les points B1 et B2 de la tringle est au moins égale à deux fois la hauteur de ladite tringle mesurée dans la direction radiale, de manière à ce que l'ancrage de l'armature de carcasse soit encore amélioré, l'augmentation de la longueur de couplage mécanique entre cette armature et la tringle étant favorable à l'endurance des bourrelets. La hauteur de la tringle correspond à la distance maximale entre deux points du contour de la tringle (vu en coupe méridienne) radialement les plus éloignés, lesdits points étant pris sur une même droite perpendiculaire à l'axe de rotation.

Le choix du domaine d'angle de la tangente au point K de l'armature additionnelle de couplage permet de renforcer la tenue mécanique des armatures autour de la tringle et dans le même temps de réduire sensiblement les conséquences des cycles de flexion du bourrelet en roulage (notamment les concentrations de contraintes en extrémités desdites armatures). Préférentiellement, cet angle est inférieur à 30°.

En outre, le collage de l'extrémité de l'armature additionnelle contre le profilé enrobant la tringle assure une meilleure tenue mécanique. Cette tenue est encore renforcée en prévoyant, outre le placage contre la tringle, de coupler l'extrémité de l'armature additionnelle contre l'armature de carcasse afin que cette extrémité suive les mouvements de carcasse et ne passe pas en compression dans les cycles de flexion du bourrelet pendant le roulage.

Un effet bénéfique sur l'endurance des bourrelets de pneumatique selon l'invention est obtenu quand la longueur de la base de la tringle est au moins égale à la moitié de la largeur du siège de jante sur laquelle ledit pneumatique est prévu d'être mis en place. Les dimensions spécifiques des jantes de montage de pneumatique pour poids lourd sont données dans des documents de normalisation ("The European Tyre and Rim Organisation E.T.R.T.O", " T.R.A. Tire and Rim Association", par exemple).

Pour des pneumatiques soumis à de fortes charges, il est avantageux de combiner à la fois une armature de carcasse formée d'une pluralité de renforts métalliques, chaque renfort étant formé d'au moins un fil de diamètre supérieur ou égal à 0.15 mm, avec une armature de couplage plus souple en flexion, c'est-à-dire formée par au moins une nappe comprenant une pluralité de renforts choisis notamment parmi les renforts suivants : fil métallique de diamètre inférieur à 0.15 mm, fil textile ou aramide.

Dans une variante de l'invention, les renforts de l'armature de couplage font un angle proche de 90° avec la direction circonférentielle, c'est-à-dire un angle au moins égal à 70°.

Dans une autre variante, l'armature additionnelle prolongeant l'armature de carcasse pour réaliser l'ancrage sur la tringle de bourrelet est constituée par un tissu de renforts croisés. Dans pareil cas, les renforts de chaîne ou de trame de ce tissu peuvent ou non être orientés comme le sont les renforts de l'armature de carcasse. En ce qui concerne le choix de ce tissu, il est bien entendu indispensable qu'il présente une souplesse de flexion appropriée pour permettre le retournement autour d'une tringle.

L'armature de couplage peut être composée d'une ou plusieurs nappes de renfort, lesdites nappes étant identiques ou non. Par ailleurs, l'armature de couplage peut être en totalité placée d'un même côté par rapport à l'armature de carcasse (par exemple entre la tringle et ladite armature de carcasse) ou encore de part et d'autre.

Avantageusement, au moins un bourrelet d'un pneumatique selon l'invention comprend en outre au moins une armature complémentaire de renforcement, cette armature complémentaire comprenant une pluralité de renforts faisant un angle différent de 90° avec la direction circonférentielle. Préférentiellement, cette armature complémentaire est placée axialement à l'intérieur de l'armature de carcasse (c'est-à-dire vers la cavité de gonflage du pneumatique) et axialement à l'intérieur de la tringle.

Pour augmenter l'effet de raidissement dans la direction circonférentielle, il est avantageux que l'angle des renforts de l'armature complémentaire de renforcement soit voisin de zéro degré, c'est-à-dire au plus égal à 10° avec la direction circonférentielle.

Pour encore améliorer la fabrication d'un bourrelet de pneumatique selon l'invention et l'ancrage de l'armature de carcasse métallique, il est avantageux de combiner l'une quelconque des dispositions précédemment décrite avec la présence d'une déformation permanente des renforts de ladite armature, cette déformation étant localisée au niveau du point de la tringle axialement le plus à l'intérieur de ladite tringle.

Un autre objet de l'invention concerne un procédé de fabrication d'un pneumatique ayant une armature de carcasse comprenant une pluralité de renforts orientés radialement et dont les extrémités sont ancrées dans chaque bourrelet à une tringle présentant essentiellement une rigidité d'extension circonférentielle et, vue en coupe méridienne, un profil comprenant deux parties de profil, une première partie radialement à l'intérieur de largeur axiale L s'étendant entre un point B2 axialement le plus à l'intérieur sur le contour de la tringle et un point B1 axialement le plus à l'extérieur sur le même contour, une seconde partie radialement à l'extérieur entre lesdits points B1 et B2. En outre, chaque bourrelet comprend au moins une armature additionnelle de couplage présentant des extrémités N1 et N2, cette armature additionnelle de couplage étant en contact sur une longueur D avec l'armature de carcasse, ladite longueur D étant mesurée en partant de l'extrémité A de l'armature de carcasse.

Le procédé selon l'invention comprend les étapes suivantes :
- On dispose sur un tambour de fabrication deux armatures de couplage axialement espacées, ces armatures ayant des rigidités de pliage appropriées pour permettre leur retournement autour d'un noyau tringle ;
- On dépose une armature de carcasse sur le même tambour de fabrication, de manière à ce que chaque extrémité de l'armature de carcasse recouvre en partie chacune des armatures de couplage ;
- On positionne, dans chaque bourrelet, un noyau tringle, formé d'une tringle enrobée dans un matériau à base de caoutchouc, concentriquement au tambour de fabrication et radialement sur l'extérieur de chaque extrémité de l'armature de carcasse, de façon que chacune des extrémités de cette armature soit située axialement entre les points B1, B2 de la partie de profil radialement interne de la tringle ;
- On retourne chacune des armatures de couplage autour de la tringle de façon que chaque extrémité d'armature de couplage soit située entre les points B1, B2 de la partie de profil radialement externe de la tringle ;
- On poursuit de façon usuelle la fabrication du pneumatique, en transformant la forme cylindrique du tambour en une forme toroïdale, puis en disposant les autres composants du pneumatique pour former une ébauche de pneumatique ;
- On moule et on vulcanise cette ébauche de pneumatique.

Les deux premières étapes du procédé décrit peuvent être réalisées dans l'ordre décrit ou de manière équivalente dans un ordre inverse.

D'autres caractéristiques et avantages de l'invention ressortent de la description faite ci-après en référence aux dessins annexés qui montrent, à titre d'exemples non limitatifs, des formes de réalisation de l'objet de l'invention.

Sur la figure 1 on montre un bourrelet de pneumatique selon une première variante de l'invention ;

Sur la figure 2, on montre une deuxième variante de bourrelet selon l'invention ;

Sur la figure 3, on montre une troisième variante de bourrelet selon l'invention ;

Sur les figures 4A et 4B, on montre deux des étapes de la fabrication d'un pneumatique selon l'invention ;

Sur la figure 5, on montre une variante de bourrelet selon l'invention ;

Sur la figure 6, on montre une autre variante de bourrelet selon l'invention selon laquelle la tringle est de section sensiblement circulaire.

Dans la description des figures, et pour en faciliter la lecture, les mêmes références sont utilisées dès lors qu'elles désignent des éléments comparables que ce soit sur le plan structurel ou encore sur le plan fonctionnel.

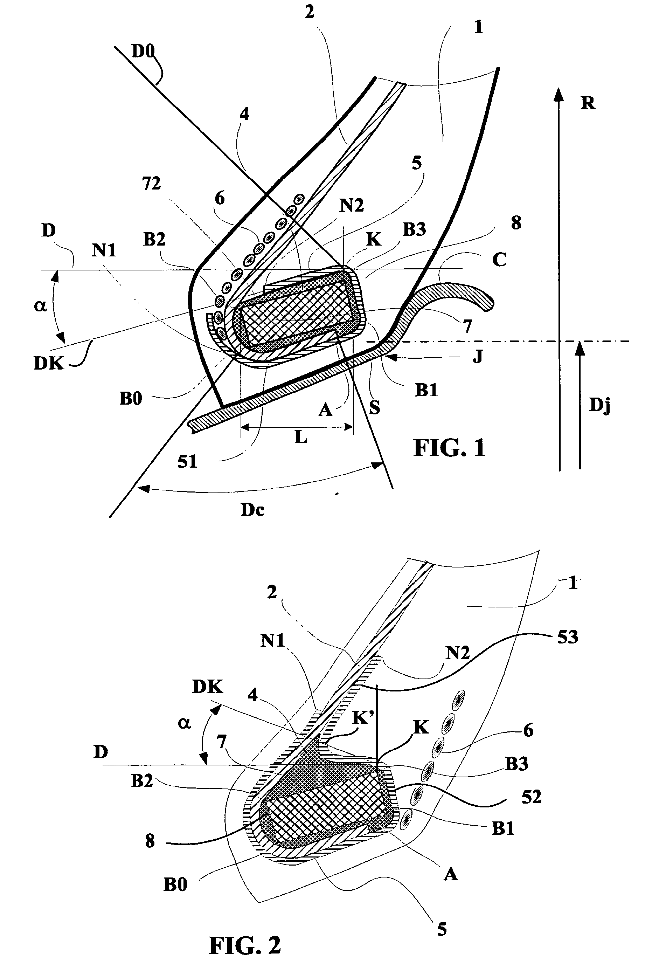

À la figure 1, on voit un bourrelet 1 d'un pneumatique selon une première variante de l'invention. Chaque bourrelet 1 de ce pneumatique de dimension 315/60 R 22.5 comprend une armature de renforcement sous la forme d'une tringle 7 métallique formée d'une pluralité de fils enroulés circonférentiellement, ladite tringle étant de section sensiblement rectangulaire présentant quatre sommets B0, B1, B2, B3 délimitant quatre côtés. Les points B0 et B1 sont situés sur le côté radialement à l'intérieur de la section de la tringle tandis que les points B2 et B3 sont situés sur le côté radialement à l'extérieur. Le sommet B0 est le point radialement le plus à l'intérieur (c'est-à-dire le plus proche de l'axe de rotation); le point B3 est le point radialement le plus à l'extérieur. Cette tringle 7 a, dans le cas présent, une largeur axiale L, mesurée entre les points B1 et B2 axialement les plus éloignés de cette base, égale à 20 nun. La hauteur de cette tringle, c'est-à-dire la dimension radiale maximale entre des points d'une même section mesurée dans une direction R perpendiculaire à l'axe de rotation du pneumatique, est ici égale à 8 mm et correspond sensiblement à la distance entre les points B0 et B2. La tringle 7 est enrobée dans un profilé 4 en mélange de caoutchouc pour former un noyau tringle 8 ayant une face radialement externe sensiblement parallèle à la face radialement externe de la tringle 7 (entre les points B2 et B3).

Le pneumatique comprend une armature de carcasse 2 formée par une nappe de renforts métalliques radiaux (câbles formés chacun par l'assemblage de 19 fils de diamètre égal à 18/100 mm), c'est-à-dire orientés de manière à faire un angle proche ou égal à 90 degrés avec la direction circonférentielle. Cette armature de carcasse 2 est partiellement enroulée autour du noyau tringle 8 de façon à être retournée autour dudit noyau tringle en passant axialement de l'intérieur vers l'extérieur jusqu'à un point d'extrémité A qui est situé radialement sous la base de la tringle (c'est-à-dire entre les points B0 et B1) et à proximité du point B1 (axialement le plus à l'extérieur par rapport à B0).

En outre, une armature additionnelle de couplage 5 est couplée mécaniquement à l'armature de carcasse 2 sur une partie 51 de longueur Dc entre un point d'extrémité N1 de l'armature additionnelle et l'extrémité A de l'armature de carcasse 2. L'armature additionnelle de couplage 5 est formée d'une nappe en mélange de caoutchouc renforcée par des renforts aramide (110x2) disposés de manière à faire sensiblement un angle de 90 degrés avec la direction circonférentielle (ces renforts sont orientés dans le pneumatique de la même manière que les renforts de la carcasse). Compte tenu de leur nature, les renforts de l'armature de couplage 5 ont des caractéristiques appropriées pour être aisément retournés autour de la tringle et plaqués sur la face radialement externe 81 du noyau tringle 8 sur plus de la moitié de la longueur axiale de cette face 81 jusqu'à un point d'extrémité N2.

De manière à éviter toute concentration de contraintes sur l'extrémité de l'armature additionnelle liée à des mouvements de flexion ou cisaillement de ladite extrémité, la partie d'extrémité de l'armature additionnelle de couplage (5) est plaquée sur le profil radialement externe de la tringle (7) entre les points (B2) et (B3), cette armature additionnelle de couplage (5) étant entièrement située radialement à l'intérieur d'une droite parallèle à l'axe de rotation et passant par un point K de ladite armature, ce point K étant obtenu comme le point d'intersection de l'armature additionnelle avec un plan perpendiculaire à l'axe de rotation passant par le point B3 radialement le plus à l'extérieur du profil de la tringle (7). Au point K, la tangente DK au profil de l'armature additionnelle fait avec une droite D parallèle à l'axe de rotation un angle alpha (α) qui est de l'ordre de 30 degrés. Cette droite DK ne passe pas dans le secteur délimité par la droite D et par une droite DO orientée à 45 degrés avec la droite D parallèle à l'axe de rotation. L'angle que fait la tangente DK avec la droite D0 est de 75 degrés.

L'armature de couplage 5 est, dans la région radialement à l'intérieur de la base de la tringle, située radialement à l'intérieur de l'armature de carcasse dans le cas présenté ici et se prolonge axialement à l'extérieur de la tringle pour ensuite suivre le profil du profilé 4 enrobant la tringle 7. Cette armature additionnelle de couplage 5 est couplée avec l'armature de carcasse 2 sur une longueur curviligne Dc sensiblement égale à 40 mm. Dans une variante non représentée, l'armature additionnelle peut être, dans la région radialement à l'intérieur de la base de la tringle, située radialement à l'extérieur de l'armature de carcasse.

Le bourrelet 1 qui vient d'être décrit est montré à la figure 1 tel qu'il est lorsqu'il est monté sur une jante de montage J de diamètre Dj égal à 22.5 pouces (571,5 mm) et comprenant un siège S prolongé axialement à l'extérieur par un rebord C de forme circulaire. Le siège S de cette jante est incliné d'un angle de 15° par rapport à l'axe de rotation et a une largeur du siège de jante sensiblement égale à 32 mm. L'inclinaison de la base de la tringle 7 entre les points B0 et B1 est sensiblement égale à l'inclinaison du siège de jante.

Le bourrelet 1 comprend en outre une armature additionnelle 6 axialement à l'intérieur de l'armature de carcasse (c'est-à-dire du côté la cavité interne du pneumatique), cette armature additionnelle 6 étant formée d'une pluralité de renforts métalliques de onze fils de diamètre égal à 0.35 mm. Dans le cas présent, ces renforts sont dits "fractionnés" c'est-à-dire qu'ils sont disposés circonférentiellement (angle nul avec cette direction circonférentielle) et que leur longueur est inférieure au périmètre du cercle de diamètre DJ égal au diamètre nominal de la jante de montage ; ces renforts fractionnés ne font donc pas un tour complet. L'extrémité radialement la plus à l'intérieur de cette armature additionnelle 6 est placée axialement entre l'armature additionnelle de couplage 5 et l'armature de carcasse 2.

On a par ailleurs constaté qu'une amélioration des performances de tenue mécanique de la carcasse de bourrelet selon l'invention pouvait être obtenue lorsque la largeur de la base de la tringle était au moins égale à 50% de la largeur du siège de jante du pneumatique. Dans le cas d'une jante de diamètre 22.5 pouces (571,5 mm), une largeur de tringle supérieure à 16 mm en combinaison avec une structure selon l'invention apporte une amélioration notable des performances d'endurance des bourrelets.

Des pneumatiques selon l'invention présentent, comparativement aux pneumatiques usuels de même dimension, des performances d'endurance qui sont en moyenne 1.5 fois supérieures à celles de pneumatiques de même dimension actuellement sur le marché (même armature de carcasse ancrée par enroulement sur une tringle et formant une partie de retournement s'étendant radialement dans le flanc du pneumatique).

Avec la figure 2, une autre variante de l'invention est présentée. Selon cette variante, l'armature additionnelle de couplage 5 suit partiellement le contour d'un profilé d'enrobage 4 d'une tringle 7 identique à celle employée pour la variante décrite avec le support de la figure 1, ledit profilé 4 ayant une section s'étendant radialement vers l'extérieur de la tringle 7 et forme, vu en coupe méridienne, une sorte de triangle 41 dont l'une des bases repose sur la face radialement externe de la tringle 7.

L'armature additionnelle de couplage 5 est couplée mécaniquement à l'armature de carcasse axialement à l'intérieur de ladite armature de carcasse (elle n'est donc pas entre la carcasse et la tringle) puis radialement à l'intérieur jusqu'au point A d'extrémité de l'armature de carcasse. Cette armature de couplage 5 se poursuit au-delà du point A par une partie 52 en contact avec le noyau tringle 71, prolongé par une partie 53 en contact avec l'armature de carcasse pour se terminer en un point N2. Dans le cas montré, le point N2 est décalé radialement à l'extérieur par rapport au point N1 de façon à éviter toute localisation d'efforts.

L'armature de couplage 5 est ici formée d'un tissu textile dont les fils de trame et de chaîne sont orientés sensiblement à 45 degrés par rapport aux renforts radiaux de l'armature de carcasse 2.

Dans cette variante, la tangente DK au point K de l'armature additionnelle fait un angle alpha (α) avec une droite D parallèle à l'axe de rotation qui est de l'ordre de 20 degrés (la demi droite DK partant du point K et dirigée vers l'intérieur du pneumatique étant située radialement à l'extérieur de la demi droite parallèle à l'axe de rotation et passant également par le point K).

Pour augmenter le verrouillage mécanique de l'armature additionnelle de couplage 5 sur la tringle, il est avantageux, comme cela est montré dans cette variante, que la tangente DK coupe l'armature additionnelle en un autre point noté K'. Plus le rayon de courbure minimal entre les points K et K' de l'armature additionnelle 5 est petit et plus le verrouillage est amélioré.

Dans cette variante (figure 2), une armature complémentaire de raidisseur 6 est positionnée axialement à l'extérieur du noyau tringle 71. Cette armature complémentaire 6 comprend une pluralité de renforts parallèles entre eux et formant un angle compris entre 15° et 35° avec la direction circonférentielle.

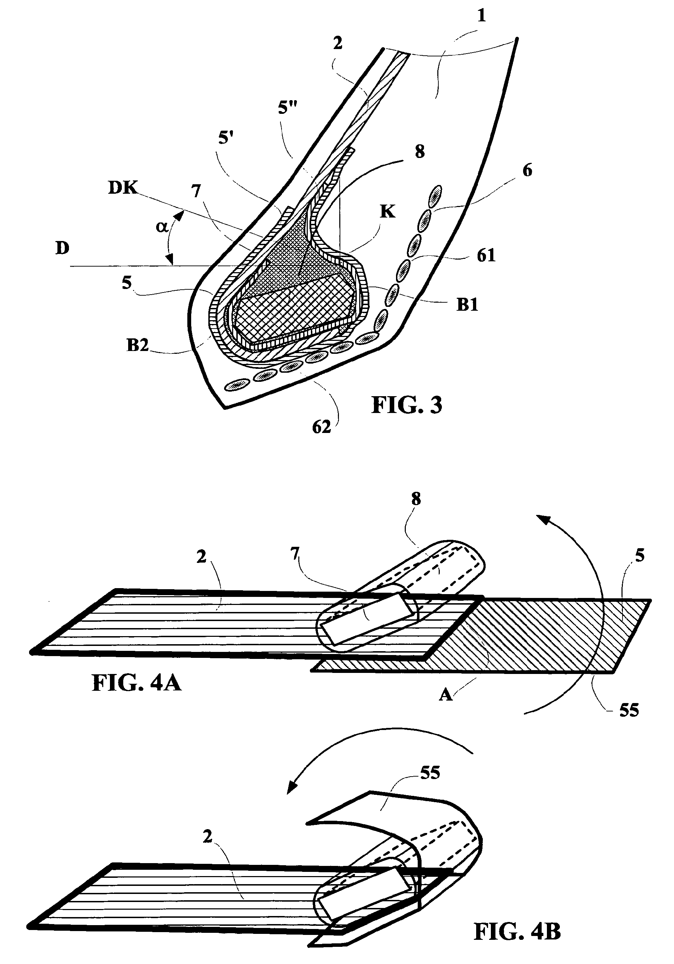

Dans une troisième variante selon l'invention, montrée avec la figure 3, le bourrelet 1 comprend une tringle 7 de bourrelet de forme sensiblement hexagonale, les six côtés du contour de cette tringle étant de longueurs inégales. La largeur axiale maximale L est prise entre les points B1 et B2 axialement les plus éloignés et correspondant ici à deux des sommets de la forme hexagonale. Dans cette variante, l'armature de carcasse 2 est identique à celles des variantes précédentes ; l'armature de couplage 5 comprend ici deux nappes de couplage 5' et 5" de longueurs inégales et dont les extrémités sont décalées les unes par rapport aux autres.

Le couplage de cette armature de couplage 5 avec l'armature de carcasse est réalisé en disposant une première nappe 5' de manière à ce qu'elle soit radialement à l'intérieur de l'armature de carcasse dans la partie partiellement retournée de ladite carcasse et une seconde nappe 5" de manière à ce qu'elle soit radialement à l'extérieur de l'armature de carcasse dans la partie partiellement retournée de ladite carcasse. La partie partiellement retournée de la carcasse correspond à l'extrémité de l'armature de carcasse située radialement à l'intérieur de la tringle 7.

Par ailleurs, on a combiné avec cette troisième variante (ce qui est également possible avec les autres variantes) la présence d'une armature additionnelle 6 présentant une partie 61 axialement à l'extérieur de la tringle 7 et une partie 62 radialement à l'intérieur de ladite tringle. Cette armature est ici formée de renforts métalliques formant préférentiellement un angle compris entre 15 degrés et 35 degrés avec la direction circonférentielle.

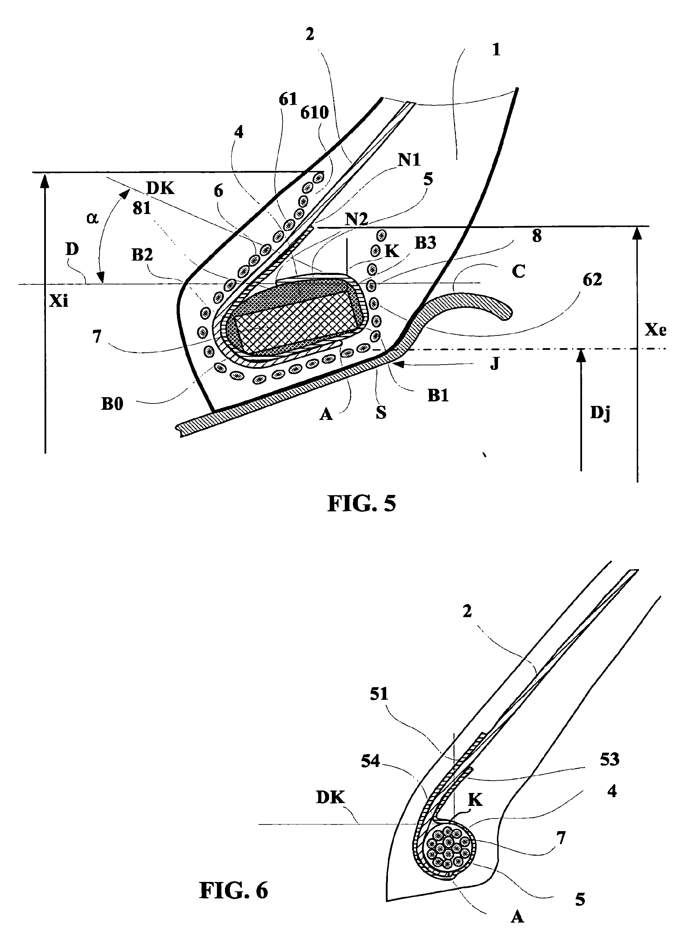

Sur la figure 5, une variante de bourrelet selon l'invention est représentée. Cette variante se distingue de la variante de la figure 1 en ce que la carcasse 2 est prolongée par une armature additionnelle 5 de couplage passant radialement entre ladite carcasse 2 et la tringle 7 dans la région radialement sous la tringle. Par ailleurs, cette armature additionnelle 5 a une première extrémité N1 localisée contre la carcasse radialement au delà de la tringle et de son recouvrement 71 en matériau caoutchouc. Le rôle de ce recouvrement est, outre une liaison mécanique, d'assurer une transition de rigidité entre la tringle métallique et les matériaux caoutchouc composant les différentes armatures (carcasse et additionnelle).

L'armature additionnelle 5 prolonge la carcasse au delà l'extrémité A de carcasse, cette extrémité A étant localisée sous la base radialement interne de la tringle (entre les points B0 et B1). Cette armature additionnelle suit ensuite le profil du recouvrement 81 de tringle jusque dans sa partie radialement externe. Au point K, la tangente DK fait un angle de l'ordre de 30 degrés avec une droite D parallèle à l'axe de rotation. Le point K est déterminé comme l'intersection de l'armature additionnelle 5 avec un plan perpendiculaire à l'axe de rotation et passant par le point B3 radialement le plus à l'extérieur de la tringle 7. Par ailleurs, toute l'armature additionnelle entre un point K et sa seconde extrémité N2 est située sensiblement radialement sous la droite DK. Cette condition implique que l'armature additionnelle suive, au voisinage du point K, une courbe à rayon de courbure relativement faible, c'est-à-dire inférieur au rayon d'un cercle inscrit autour de la section de la tringle.

En outre, cette structure comporte une armature complémentaire de raidisseur 6 formée d'une pluralité de câbles métalliques inclinés par rapport à la direction circonférentielle selon un angle faible (c'est-à-dire inférieur à 45°). Cette armature complémentaire est située, axialement à l'intérieur de la carcasse et plaquée contre elle sauf à son extrémité où il est prévu un profilé 610 de caoutchouc écartant ladite extrémité de la carcasse pour réduire les effets de cisaillement. Cette armature complémentaire est enroulée autour de la tringle pour former un retournement 62 qui suit la face latérale de la tringle entre B1 et B3 puis se prolonge au delà de la droite D jusqu'à une distance radiale Xe mesurée par rapport à l'axe de rotation qui est sensiblement égale à la distance radiale de l'extrémité N1 de l'armature additionnelle 5 située contre la carcasse. Dans le cas présenté, les extrémités de l'armature complémentaire de raidisseur 6 sont situées à des distances (Xe, Xi) qui sont différentes afin de ne pas créer de zone de concentration de contraintes en fonctionnement.

Dans une autre variante représentée avec la figure 6, un bourrelet selon l'invention comprend une armature de carcasse métallique 2 enroulée partiellement autour d'une tringle de section circulaire 7, cette dernière étant enrobée dans un profilé 4 en mélange de caoutchouc assurant notamment la liaison mécanique entre la carcasse 2 et la tringle 7. Une armature additionnelle de couplage 5 formée d'une pluralité de renforts métalliques de faible rigidité à la flexion (c'est-à-dire pouvant suivre facilement des rayons de courbure égaux voire inférieur au rayon de la tringle 4) est couplée à l'armature de carcasse sur une partie 53 et se prolonge ensuite pour faire le tour du noyau tringle 8 au delà d'un point K obtenu comme le point d'intersection avec le profil 4 enrobant la tringle et une droite perpendiculaire à l'axe de rotation passant par le point de la tringle radialement le plus à l'extérieur. Au point K la tangente au profil de l'armature additionnelle 5 est sensiblement parallèle à l'axe de rotation.

Avantageusement, l'armature additionnelle de couplage 5 comprend, au delà du point K et avant la partie d'extrémité plaquée contre l'armature de carcasse, une région 54 de très faible rayon de courbure obtenue par pliage de cette armature 5 (ce qui se traduit par une déformation plastique des renforts métalliques de cette armature 5). Cette dernière variante peut avantageusement être combinée avec les dispositions de renforcement complémentaire telles que décrites avec les variantes précédentes.

Comme variante aux réalisations présentées dans le présent document, il peut être avantageux de prévoir que l'armature additionnelle de couplage soit continue d'un bourrelet à l'autre : cette variante réduit le nombre d'extrémités d'armature à deux, ces dernières étant localisées près des tringles ou de l'armature de carcasse, c'est-à-dire dans des régions peu sensibles aux mouvements de flexion des bourrelets (étant entendu que l'armature de carcasse est située axialement à l'intérieur de la tringle et qu'elle est enroulée partiellement autour de la tringle en passant axialement de l'intérieur vers l'extérieur).

Dans toutes les variantes selon l'invention, il peut être avantageux de préparer l'armature de carcasse métallique de manière à ce qu'elle comprenne une déformation plastique permanente localisée par exemple au niveau du point axialement le plus à l'intérieur du contour de la tringle. Cette déformation permanente a pour effet d'améliorer la tenue mécanique de l'ancrage sur la tringle et d'améliorer la faisabilité des bourrelets en fabrication. Par déformation permanente, on entend ici une déformation plastique du métal ; cette déformation peut être réalisée par pliage ou à l'aide d'un outil approprié pour réaliser une déformation de pliage sur ladite armature de carcasse au cours de la préparation de l'armature de carcasse avant fabrication du pneumatique. Ce même type de déformation permanente peut également être envisagé sur l'armature additionnelle de couplage en un ou plusieurs points, dès lors que cette armature est composée de renforts pouvant être déformés de manière permanente.

Le procédé selon l'invention est décrit avec le support des figures 4A et 4B. Dans un premier temps, on pose sur un tambour de fabrication (non représenté), des premières nappes additionnelles de couplage 5 de façon à ce qu'elles soient axialement distantes l'une de l'autre sur ledit tambour. Puis, on pose sur ce tambour de fabrication une nappe de carcasse 2 pour former une armature de carcasse d'un pneumatique, ladite nappe chevauchant en partie chaque nappe additionnelle de couplage 5. Ensuite, on enfile concentriquement au tambour et axialement près de chaque extrémité A de la nappe de carcasse, un noyau tringle 8 en mélange de caoutchouc renforcé par une tringle 7 se présentant sous la forme d'un anneau.

Dans une étape suivante (figure 4B), on retourne l'extrémité axialement externe 55 de chaque nappe additionnelle de couplage 5 de manière à venir l'enrouler autour du noyau tringle 8 et à plaquer son extrémité sur la face radialement externe dudit noyau. Au cours de cette opération, l'extrémité de la nappe de carcasse est plaquée contre la face radialement à l'intérieur 81 du noyau tringle 8. Les étapes suivantes de confection du pneumatique (non représentées) consistent dans un premier temps en une mise en forme toroïdale par déformation radiale de la nappe de carcasse tout en rapprochant axialement les tringles l'une de l'autre dans le même temps. Une fois dans cette configuration, on peut, par exemple, venir rapporter une ceinture de sommet conférant à la fois un renforcement circonférentiel et axial au pneumatique puis compléter par tous les profilés usuels composant un pneumatique. Une fois terminée, cette ébauche de pneumatique est introduite dans un moule afin de fixer la forme définitive du pneumatique et réaliser la vulcanisation des différents mélanges de caoutchouc le composant.

Le même procédé peut être mis en oeuvre pour réaliser l'une quelconque des variantes présentées précédemment.

## Revendications

1. Pneumatique comprenant des flancs reliant une partie de sommet à des bourrelets (1) destinés à venir en contact avec une jante de montage (J), ces flancs comprenant une armature de carcasse (2) comprenant une pluralité de renforts disposés selon un angle d'au moins 70° avec la direction circonférentielle, cette armature de carcasse (2) étant ancrée dans chaque bourrelet (1) à au moins une tringle (7) de bourrelet et ayant, dans chaque bourrelet, une extrémité (A), la tringle (7) de bourrelet présentant essentiellement une rigidité d'extension circonférentielle et, vue en coupe méridienne, un profil externe comprenant deux parties de profil, une première partie radialement à l'intérieur de largeur axiale L s'étendant entre un point (B2) axialement le plus à l'intérieur et un point (B1) axialement le plus à l'extérieur, une seconde partie radialement à l'extérieur entre lesdits points (B1) et (B2), cette tringle étant recouverte par au moins un profilé de mélange de caoutchouc pour assurer une liaison mécanique avec l'armature de carcasse (2), cette armature de carcasse (2) étant enroulée partiellement autour de la tringle (7) en allant axialement de l'intérieur du pneumatique vers l'extérieur de façon que son extrémité (A) soit située axialement entre les points d'extrémité (B1) et (B2) de la partie de profil radialement interne de la tringle (7), chaque bourrelet comprenant au moins une armature additionnelle de couplage (5) en contact sur une longueur de contact (Dc) avec l'armature de carcasse (2), ladite longueur de contact (Dc) étant mesurée en partant de l'extrémité (A) de l'armature de carcasse (2), ce pneumatique étant **caractérisé en ce que**, dans chaque bourrelet et vu en coupe méridienne - c'est-à-dire dans un plan de coupe contenant l'axe de rotation - :
l'armature additionnelle de couplage (5) prolonge l'armature de carcasse (2) de manière à être enroulée au moins en partie autour de la tringle (7), c'est-à-dire de manière à recouvrir au moins partiellement la seconde partie du profil radialement externe de la tringle (7) entre les points d'extrémité (B1) et (B2), ladite armature additionnelle de couplage (5) ayant un tracé tel que la tangente à ce tracé, en un point (K) de ladite armature, fait un angle inférieur à 45 degrés avec une droite parallèle à l'axe de rotation, ce point (K) étant déterminé comme le point d'intersection entre le tracé de l'armature additionnelle (5) et une droite passant par le point du profil de la tringle radialement le plus à l'extérieur et perpendiculaire à l'axe de rotation.

2. Pneumatique selon la revendication 1 **caractérisé en ce que** l'armature additionnelle se poursuit au delà du point (K) par une partie d'extrémité en contact avec le profilé d'enrobage de la tringle.

3. Pneumatique selon la revendication 2 **caractérisé en ce que** l'armature additionnelle est toute entière située radialement sous la tangente (DK).

4. Pneumatique selon la revendication 2 **caractérisé en ce que** la partie en contact avec le profilé d'enrobage de la tringle au delà du point (K) se prolonge par une partie venant se plaquer contre l'armature de carcasse, la tangente (DK) à l'armature additionnelle coupant en un second point (K') ladite armature additionnelle.

5. Pneumatique selon l'une des revendications 1 à 4 **caractérisé en ce que** la longueur de couplage (Dc) entre l'armature de carcasse (2) et l'armature additionnelle de couplage (5) est au moins égale à la distance axiale (L) séparant les points (B1) et (B2) du profil externe de la tringle.

6. Pneumatique selon l'une des revendications 1 à 5 **caractérisé en ce que** la largeur (L) de la face interne de la tringle (7) est au moins égale à deux fois la hauteur de ladite tringle mesurée dans la direction radiale, ladite hauteur correspondant à la distance maximale entre des points de ladite tringle radialement les plus éloignés, lesdits points étant pris sur une même droite perpendiculaire à l'axe de rotation.

7. Pneumatique selon l'une des revendications 1 à 6 **caractérisé en ce que** l'armature de carcasse (2) est formée d'une pluralité de renforts métalliques, chaque renfort étant formé d'au moins un fil de diamètre supérieur ou égal à 0.15 mm et **en ce que** l'armature additionnelle de couplage (5) est formée par au moins une nappe comprenant une pluralité de renforts choisis notamment parmi les renforts suivants : fil métallique de diamètre inférieur à 0.15 mm, fil textile ou aramide.

8. Pneumatique selon l'une des revendications 1 à 7 **caractérisé en ce qu'**au moins un bourrelet comprend en outre au moins une armature complémentaire de raidisseur (6), cette armature complémentaire comprenant une pluralité de renforts faisant un angle inférieur à 45° avec la direction circonférentielle.

9. Pneumatique selon la revendication 8 **caractérisé en ce que** l'angle des renforts de l'armature complémentaire de raidisseur (6) est voisin de zéro degré, c'est-à-dire au plus égal à 10° avec la direction circonférentielle, et **en ce que** la longueur de ces renforts est inférieure au périmètre du cercle de diamètre (DJ) égal au diamètre nominal de la jante de montage.

10. Pneumatique selon l'une des revendications 1 à 9 **caractérisé en ce que** l'armature additionnelle de couplage (5) est continue d'un bourrelet à l'autre.

11. Pneumatique selon l'une des revendications 1 à 10 **caractérisé en ce que** les renforts de l'armature de carcasse (2) comprennent au moins une déformation permanente localisée au niveau du point axialement et radialement le plus à l'intérieur de la tringle (7).

12. Procédé de fabrication d'un pneumatique ayant une armature de carcasse (2) comprenant une pluralité de renforts orientés radialement et dont les extrémités sont ancrées dans chaque bourrelet à un noyau tringle (8) comprenant une tringle (7) présentant essentiellement une rigidité d'extension circonférentielle et, vue en coupe méridienne, un profil comprenant deux parties de profil, une première partie radialement à l'intérieur de largeur axiale L s'étendant entre un point (B2) axialement le plus à l'intérieur sur le contour de la tringle et un point (B1) axialement le plus à l'extérieur sur le même contour, une seconde partie radialement à l'extérieur entre lesdits points (B1) et (B2). En outre, chaque bourrelet comprend au moins une armature additionnelle de couplage (5) présentant des extrémités (N1) et (N2), cette armature additionnelle de couplage étant en contact sur une longueur (Dc) avec l'armature de carcasse, ladite longueur (Dc) étant mesurée en partant de l'extrémité (A) de l'armature de carcasse (2), le procédé comprenant les étapes suivantes :
• on dispose sur un tambour de fabrication deux armatures de couplage (5) axialement espacées, ces armatures de couplage ayant des rigidités de pliage appropriées pour permettre leur retournement autour d'un noyau tringle (8) ;
• on dépose une armature de carcasse (2) sur le même tambour de fabrication, de manière à ce que chaque extrémité de ladite armature de carcasse (2) recouvre en partie chacune des armatures de couplage (5) ;
• on positionne, dans chaque bourrelet, un noyau tringle (8), formé d'une tringle (7) enrobée dans un matériau à base de caoutchouc, concentriquement au tambour de fabrication et radialement sur l'extérieur de chaque extrémité de l'armature de carcasse, de façon que chacune des extrémités de cette armature soit située axialement entre les points (B1), (B2) de la partie de profil radialement interne de la tringle ;
• on retourne chacune des armatures de couplage (5) autour du noyau tringle (8) de façon que chaque extrémité d'armature de couplage soit située entre les points (B1), (B2) de la partie de profil radialement externe de la tringle ;
• on poursuit de façon usuelle la fabrication du pneumatique, en transformant la forme cylindrique du tambour en une forme toroïdale, puis en disposant les autres composants du pneumatique pour former une ébauche de pneumatique ;
• on moule et on vulcanise cette ébauche de pneumatique.

## Patentansprüche

1. Reifen, der Flanken aufweist, die einen Scheitelteil mit Wülsten (1) verbindet, die dazu bestimmt sind, mit einer Montagefelge (J) in Berührung zu kommen, wobei diese Flanken eine Karkassenbewehrung (2) aufweisen, die eine Mehrzahl von Verstärkungen aufweist, die gemäß einem Winkel von mindestens 70° zu der Umfangsrichtung angeordnet sind, wobei diese Karkassenbewehrung (2) in jedem Wulst (1) in mindestens einem Wulstdrahtseil (7) verankert ist und in jedem Wulst ein Ende (A) aufweist, wobei das Wulstdrahtseil (7) im Wesentlichen eine umfängliche Dehnungssteifigheit aufweist und, im Meridianschnitt gesehen, ein Außenprofil aufweist, das zwei Profilteile aufweist, einen ersten Teil der radial im Inneren der axialen Breite L liegt, die sich zwischen einem axial am weitesten innen liegenden Punkt (B2) und einem axial am weitesten außen liegenden Punkt (B1) erstreckt, einen zweiten Teil, der radial außerhalb der zwei Punkte (B1) und (B2) liegt, wobei dieses Drahtseil durch mindestens ein Profil aus Kautschukgemisch abgedeckt ist, um eine mechanische Verbindung mit der Karkassenbewehrung (2) sicherzustellen, wobei diese Karkassenbewehrung (2) teilweise um das Drahtseil (7) aufgewickelt ist, indem sie axial von dem Inneren des Reifens zum Äußeren derart verläuft, dass ihr Ende (A) axial zwischen den Endpunkten (B1) und (B2) des radial inneren Profilteils des Drahtseils (7) liegt, wobei jeder Wulst mindestens eine zusätzliche Verbindungsbewehrung (5) aufweist, die auf einer Kontaktlänge (Dc) mit der Karkassenbewehrung (2) in Berührung ist, wobei die Kontaktlänge (Dc) ausgehend von dem Ende (A) der Karkassenbewehrung (2) gemessen wird, wobei dieser Reifen **dadurch gekennzeichnet ist, dass** in jedem Wulst und im Meridianschnitt gesehen, das heißt in einer Schnittebene, die die Rotationsachse enthält:
die zusätzliche Verbindungsbewehrung (5) die Karkassenbewehrung (2) derart verlängert, dass sie mindestens zum Teil um das Drahtseil (7) aufgewickelt ist, das heißt derart, dass der zweite Teil des radial äußeren Profils des Drahtseils (7) zwischen den Endpunkten (B1) und
(B2) mindestens teilweise abgedeckt ist, wobei die zusätzliche Verbindungsbewehrung (5) einen Verlauf derart hat, dass die Tangente zu diesem Verlauf an einem Punkt (K) der Bewehrung einen Winkel kleiner als 45 Grad mit einer Geraden bildet, die zu der Rotationsachse parallel ist, wobei dieser Punkt (K) als der Schnittstellenpunkt zwischen dem Verlauf der zusätzlichen Bewehrung (5) und einer Geraden, die durch den Profilpunkt des Drahtseils, der am weitesten außerhalb und senkrecht zu der Rotationsachse liegt, festgelegt ist.

2. Reifen nach Anspruch 1, **dadurch gekennzeichnet, dass** die zusätzliche Bewehrung über den Punkt (K) hinaus durch einen Endteil fortsetzt, der mit dem Beschichtungsprofil des Drahts in Berührung ist.

3. Reifen nach Anspruch 2, **dadurch gekennzeichnet, dass** die zusätzliche Bewehrung vollständig radial unter der Tangente (DK) liegt.

4. Reifen nach Anspruch 2, **dadurch gekennzeichnet, dass** sich der Teil in Berührung mit dem Beschichtungsprofil des Drahts über den Punkt (K) hinaus durch einen Teil verlängert, der sich gegen die Karkassenbewehrung legt, wobei die Tangente (DK) zu der zusätzlichen Bewehrung die zusätzliche Bewehrung in einem zweiten Punkt (K') schneidet.

5. Reifen nach einem der Ansprüche 1 bis 4, **dadurch gekennzeichnet, dass** die Kontaktlänge (Dc) zwischen der Karkassenbewehrung (2) und der zusätzlichen Verbindungsbewehrung (5) mindestens gleich der axialen Entfernung (L) ist, die die Punkte (B1) und (B2) des Außenprofils des Drahtseils trennt.

6. Reifen nach einem der Ansprüche 1 bis 5, **dadurch gekennzeichnet, dass** die Breite (L) der Innenseite des Drahtseils (7) mindestens zwei Mal die Höhe des Drahtseils in die radiale Richtung gemessen ist, wobei die Höhe der maximalen Entfernung zwischen Punkten des Drahtseils, die radial am weitesten entfernt sind, entspricht, wobei die Punkte auf ein und derselben Geraden senkrecht zu der Rotationsachse genommen werden.

7. Reifen nach einem der Ansprüche 1 bis 6, **dadurch gekennzeichnet, dass** die Karkassenbewehrung (2) aus einer Vielzahl metallischer Verstärkungen ausgebildet ist, wobei jede Verstärkung aus mindestens einem Drahtseil mit einem Durchmesser größer oder gleich 0,15 mm gebildet ist, und wobei die zusätzliche Verbindungsbewehrung (5) durch mindestens eine Lage ausgebildet ist, die eine Mehrzahl von Verstärkungen aufweist, die insbesondere aus den folgenden Verstärkungen ausgewählt ist: Metalldraht mit Durchmesser kleiner als 0,15 mm, Textil- oder Aramidfaden.

8. Reifen nach einem der Ansprüche 1 bis 7, **dadurch gekennzeichnet, dass** mindestens ein Wulst außerdem mindestens eine zusätzliche Versteiferbewehrung (6) aufweist, wobei diese zusätzliche Bewehrung eine Mehrzahl von Verstärkungen aufweist, die einen Winkel kleiner als 45° zu der umfänglichen Richtung bilden.

9. Reifen nach Anspruch 8, **dadurch gekennzeichnet, dass** der Winkel der Verstärkungen der zusätzlichen Versteiferbewehrung (6) nahe null Grad liegt, das heißt mindestens gleich 10° zu der umfänglichen Richtung, und dass die Länge dieser Verstärkungen kleiner ist als der Umkreis des Kreises mit dem Durchmesser (DJ) gleich dem Nenndurchmesser der Montagefelge.

10. Reifen nach einem der Ansprüche 1 bis 9, **dadurch gekennzeichnet, dass** die zusätzliche Verbindungsbewehrung (5) von einem Wulst zum anderen durchgehend ist.

11. Reifen nach einem der Ansprüche 1 bis 10, **dadurch gekennzeichnet, dass** die Karkassenbewehrungsverstärkungen (2) mindestens eine dauerhafte Verformung aufweisen, die sich auf dem Niveau des axial und radial am weitesten innerhalb des Drahtseils (7) liegenden Punkts befinden.

12. Fertigungsverfahren eines Reifens, der eine Karkassenbewehrung (2) aufweist, die eine Mehrzahl von Verstärkungen aufweist, die radial ausgerichtet sind, und deren Enden in jedem Wulst an einem Drahtseilkern (8) verankert sind, der ein Drahtseil (7) aufweist, das im Wesentlichen eine umfängliche Ausdehnungssteifigheit aufweist und, im Meridianschnitt gesehen, ein Profil, das zwei Profilteile aufweist, einen ersten Teil, der radial im Inneren der axialen Breite L, die sich zwischen einem Punkt (B2), der axial am weitesten innerhalb auf der Kontur des Drahtseils liegt, und einem Punkt (B1), der axial am weitesten außerhalb auf derselben Kontur liegt, einen zweiten Teil radial außerhalb zwischen den Punkten (B1) und (B2) liegt, erstreckt. Außerdem weist jeder Wulst mindestens eine zusätzliche Verbindungsbewehrung (5) auf, die Enden (N1) und (N2) aufweist, wobei diese zusätzliche Verbindungsbewehrung auf einer Länge (Dc) mit der Karkassenbewehrung in Berührung ist, wobei die Länge (Dc) ausgehend von dem Ende (A) der Karkassenbewehrung (2) gemessen wird, wobei das Verfahren die folgenden Schritte aufweist:
• Anordnen von zwei axial beabstandeten Verbindungsbewehrungen (5) auf einer Fertigungstrommel, wobei diese Verbindungsbewehrungen entsprechende Biegesteifigkeiten aufweisen, um ihr Umbiegen um einen Drahtseilkern (8) zu erlauben,
• Ablegen einer Karkassenbewehrung (2) auf derselben Fertigungstrommel derart, dass jedes Ende der Karkassenbewehrung (2) jede der Verbindungsbewehrungen (5) zum Teil abdeckt,
• Positionieren in jedem Wulst eines Drahtseilkerns (8), der aus einem Drahtseil (7), das mit einem Material auf Kautschukbasis beschichtet ist, konzentrisch zur Fertigungstrommel und radial zum Äußeren jedes Endes der Karkassenbewehrung gebildet ist, so dass jedes der Enden dieser Bewehrung axial zwischen den Punkten (B1), (B2) des radial inneren Profilteils des Drahtseils liegt,
• Umbiegen jeder der Verbindungsbewehrungen (5) um den Drahtseilkern (8) derart, dass jedes Verbindungsbewehrungsende zwischen den Punkten (B1), (B2) des radial äußeren Profilteils des Drahtseils liegt,
• Fortsetzen der Fertigung des Reifens wie üblich, indem man die zylindrische Form der Trommel in eine Ringform umwandelt, indem man dann die anderen Bestandteile des Reifens anordnet, um einen Reifenrohling zu bilden,
• Abformen und Vulkanisieren dieses Reifenrohlings.

## Claims

1. A tire comprising sidewalls joining a crown part to beads (1) that are intended to come into contact with a mounting rim (J), these sidewalls comprising a carcass reinforcement (2) comprising a plurality of reinforcing members placed at an angle of at least 70° to the circumferential direction, this carcass reinforcement (2) being anchored in each bead (1) to at least one bead wire (7) and having an end (A) in each bead, the bead wire (7) exhibiting essentially circumferential extensional rigidity and having, seen in meridional cross-section, an outer profile comprising two profile parts, a first part radially to the inside of axial width (L), extending between an axially innermost point (B2) and an axially outermost point (B1), and a second part radially to the outside between said points (B1) and (B2), this bead wire being covered with at least one profiled element made of rubber compound in order to provide a mechanical link with the carcass reinforcement (2), this carcass reinforcement (2) being partially wrapped around the bead wire (7) going axially outward from the inside of the tire so that its end (A) is located axially between the end points (B1) and (B2) of the radially internal profile part of the bead wire (7), each bead comprising at least one additional coupling reinforcement (5) in contact over a contact length Dc with the carcass reinforcement (2), said contact length Dc being measured starting from the end (A) of the carcass reinforcement (2), this tire being **characterized in that**, in each bead and seen in meridional cross-section - i.e. in a cross-sectional plane containing the axis of rotation:
the additional coupling reinforcement (5) extends the carcass reinforcement (2) so as to be at least partly wrapped around the bead wire (7), that is to say so as to at least partially cover the second part of the radially external profile of the bead wire (7) between the end points (B1) and (B2), said additional coupling reinforcement (5) having a trace such that the tangent to this trace, at a point K on said reinforcement, makes an angle of less than 45° to a straight line parallel to the axis of rotation, this point K being determined as the point of intersection between the trace of the additional reinforcement (5) and a straight line passing through the radially outermost point of the bead wire profile and perpendicular to the axis of rotation.

2. The tire as claimed in claim 1, **characterized in that** the additional reinforcement is continued beyond the point K by an end part in contact with the profiled element covering the bead wire.

3. The tire as claimed in claim 2, **characterized in that** the additional reinforcement is entirely located radially below the tangent DK.

4. The tire as claimed in claim 2, **characterized in that** the part in contact with the profiled element covering the bead wire beyond the point K is extended by a part pressing against the carcass reinforcement, the tangent DK to the additional reinforcement cutting said additional reinforcement at a second point K'.

5. The tire as claimed in one of claims 1 to 4, **characterized in that** the coupling link Dc between the carcass reinforcement (2) and the additional coupling reinforcement (5) is at least equal to the axial distance L separating the points (B1) and (B2) of the outer profile of the bead wire.

6. The tire as claimed in one of claims 1 to 5, **characterized in that** the width L of the internal face of the bead wire (7) is at least equal to twice the height of said bead wire measured in the radial direction, said height corresponding to the maximum distance between points on said bead wire that are radially furthest apart, said points being taken along the same straight line perpendicular to the axis of rotation.

7. The tire as claimed in one of claims 1 to 6, **characterized in that** the carcass reinforcement (2) is formed from a plurality of metal reinforcing members, each reinforcing member being formed from at least one thread with a diameter of 0.15 mm or higher and **in that** the additional coupling reinforcement (5) is formed by at least one ply comprising a plurality of reinforcing members chosen in particular from the following reinforcing members: metal thread with a diameter of less than 0.15 mm; textile or aramid thread.

8. The tire as claimed in one of claims 1 to 7, **characterized in that** at least one bead further includes at least one complementary stiffening reinforcement (6), this complementary reinforcement comprising a plurality of reinforcing members making an angle of less than 45° to the circumferential direction.

9. The tire as claimed in claim 8, **characterized in that** the angle of the reinforcing members of the complementary stiffening reinforcement (6) is close to 0°, that is to say at most equal to 10°, to the circumferential direction and **in that** the length of these reinforcing members is less than the perimeter of the circle of diameter DJ equal to the nominal diameter of the mounting rim.

10. The tire as claimed in one of claims 1 to 9, **characterized in that** the additional coupling reinforcement (5) is continuous from one bead to the other.

11. The tire as claimed in one of claims 1 to 10, **characterized in that** the reinforcing members of the carcass reinforcement (2) include at least one permanent deformation located at the axially and radially innermost point of the bead wire (7).

12. A process for manufacturing a tire having a carcass reinforcement (2) comprising a plurality of radially oriented reinforcing members, the ends of which are anchored in each bead to a bead wire core (8) comprising a bead wire (7) essentially exhibiting circumferential extensional rigidity and having, seen in meridional cross-section, a profile comprising two profile parts, a first part radially to the inside of axial width L, extending between an axially innermost point (B2) on the outline of the bead wire and an axially outermost point (B1) on the same outline, and a second part radially to the outside between said points (B1) and (B2), each bead further including at least one additional coupling reinforcement (5) having ends (N1) and (N2), this additional coupling reinforcement being in contact over a length Dc with the carcass reinforcement, said length Dc being measured starting from the end (A) of the carcass reinforcement (2), the process comprising the following steps:
• two coupling reinforcements (5) axially spaced apart are placed on a manufacturing drum, these coupling reinforcements being of appropriate bending stiffness so as to allow them to be turned up around a bead wire core (8);
• a carcass reinforcement (2) is deposited on the same manufacturing drum, so that each end of said carcass reinforcement (2) partly covers each of the coupling reinforcements (5);
• a bead wire core (8) is positioned in each bead, said core being formed from a bead wire (7) covered in a rubber-based material, concentrically with respect to the manufacturing drum and radially to the outside of each end of the carcass reinforcement, so that each of the ends of this reinforcement lies axially between the points (B1), (B2) of the radially internal profile part of the bead wire;
• each of the coupling reinforcements (5) is turned up around the bead wire core (8) so that each coupling reinforcement end lies between the points (B1), (B2) of the radially external profile part of the bead wire;
• the process continues in the usual manner for manufacturing the tire, by converting the cylindrical shape of the drum into a toroidal shape and then by placing the other components of the tire thereon in order to form a tire blank; and
• this tire blank is molded and vulcanized.
